(19) Europäisches Patentamt
European Patent Office
Office européen des brevets

(11) **EP 4 191 994 A1**

(12) **EUROPEAN PATENT APPLICATION**
published in accordance with Art. 153(4) EPC

(43) Date of publication:
**07.06.2023 Bulletin 2023/23**

(21) Application number: **21851010.5**

(22) Date of filing: **12.07.2021**

(51) International Patent Classification (IPC):
*H04N 5/232* (2006.01)   *G06T 7/00* (2017.01)
*G06T 7/586* (2017.01)   *H04N 5/225* (2006.01)

(52) Cooperative Patent Classification (CPC):
**G06T 7/00; G06T 7/586; H04N 23/00; H04N 23/60**

(86) International application number:
**PCT/JP2021/026194**

(87) International publication number:
**WO 2022/024739 (03.02.2022 Gazette 2022/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.07.2020   JP 2020127474**

(71) Applicant: **Cyberware Inc.**
**Tokyo 162-0825 (JP)**

(72) Inventors:
• **NAGAKUBO, Kosuke**
**Tokyo 162-0825 (JP)**
• **HIRAKA, Takafumi**
**Tokyo 162-0825 (JP)**

(74) Representative: **Bandpay & Greuter**
**30, rue Notre-Dame des Victoires**
**75002 Paris (FR)**

(54) **IMAGE DETERMINATION METHOD AND IMAGE DETERMINATION DEVICE**

(57)    Whether an imaged image is an actually-imaged image or a re-imaged image is determined. A control device obtains a first imaged image generated by image-capturing an image-capturing target irradiated with light according to a first light-emitting pattern, obtains a second imaged image generated by image-capturing the image-capturing target irradiated with light according to a second light-emitting pattern, calculates a first set of luminance values and a second set of luminance values regarding the first imaged image and the second imaged image, calculates a set of difference values between the first set of luminance values and the second set of luminance values, and determines a luminance distribution in the set of difference values.

```
              START
                │
  EMIT LIGHT ACCORDING TO          S501
  FIRST LIGHT-EMITTING PATTERN
                │
  GENERATE FIRST IMAGED IMAGE      S502
                │
  EMIT LIGHT ACCORDING TO          S503
  SECOND LIGHT-EMITTING PATTERN
                │
  GENERATE SECOND IMAGED IMAGE     S504
                │
  CALCULATE FIRST SET OF           S505
  LUMINANCE VALUES
                │
  CALCULATE SECOND SET OF          S506
  LUMINANCE VALUES
                │
  CALCULATE SET OF                 S507
  DIFFERENCE VALUES
                │
  CALCULATE SET OF BINARIES        S508
                │
  COMPARE WITH THRESHOLD           S509
                │
              END
```

**FIG.5**

**Description**

Technical Field

The present disclosure relates to an image determination method and an image determination device. Particularly, the present disclosure relates to a technique to specify an image that is generated by image-capturing a photograph and the like instead of an image that is generated by image-capturing a real-life object such as a human in a case of authentication such as face authentication.

Background Art

In recent years, there has been a technique to request biometric authentication in a case of log-in in order to prevent unauthorized log-in by others to a computer device such as a smartphone. A typical example of this biometric authentication is face authentication. In the face authentication, in a case of log-in, an imaged image is generated by image-capturing the face of a user by using a camera to compare with a registered image stored in advance.

For example, including main component analysis and the like, the face authentication usually uses an algorithm to analyze a common point between features of the face identified from the imaged image and features of the face identified from the registered image and determine that the faces match. In a case of using such an algorithm, in some cases, an imaged image such as a photograph or a video that is generated by further image-capturing an image (a still image or a moving image) that is generated by image-capturing an object in advance may be determined to match the registered image.

According to the above descriptions, there is a risk that, if a malicious third person illegally obtains a possession including a face photograph (such as a driver license) from an authorized user, the face photograph may be used to illegally log in any computer system that requests the biometric authentication.

Citation List

Patent Literature

PTL 1: International Publication No. WO2019/017080

Summary of Invention

Technical Problem

PTL 1 discloses a technique of identifying a photographic image and a real image by counting the number of pixels (frequency) for each luminance regarding all the pixels in a face region from the photographic image and determining a range of luminance distribution. The technique described in PTL 1 merely counts the number of pixels for each luminance regarding the pixels in the photographic image; for this reason, for example, a set of luminance values in a re-imaged image generated from a photograph that is image-captured by a high-accuracy camera may have a great luminance distribution in some cases. Therefore, in some cases, it is impossible to determine whether the imaged image is an actually-imaged image or a re-imaged image.

Solution to Problem

A computer device according to an embodiment is a computer device including a control device, characterized in that the control device is configured to obtain a first imaged image, the first imaged image being generated by image-capturing an image-capturing target irradiated with light according to a first light-emitting pattern, obtain a second imaged image, the second imaged image being generated by image-capturing the image-capturing target irradiated with light according to a second light-emitting pattern, calculate a first set of luminance values regarding pixels in the first imaged image, calculate a second set of luminance values regarding pixels in the second imaged image, calculate a set of difference values between the first set of luminance values and the second set of luminance values, and determine a luminance distribution in the set of difference values based on a reference luminance value.

A system according to another embodiment is system, characterized in that the system includes: a light-emitting device that irradiates an image-capturing target with first light according to a first light-emitting pattern and irradiates the image-capturing target with second light according to a second light-emitting pattern; an imaging device that image-captures the image-capturing target irradiated with the first light in a first time and image-captures the image-capturing target irradiated with the second light in a second time; and a control device that generates a first imaging device according to image-capturing in the first time, generates a second imaging device according to image-capturing in the second time, calculates a first set of luminance values regarding a pixel in the first imaged image, calculates a second set of luminance values regarding a pixel in the second imaged image, calculates a set of difference values between the first set of luminance values and the second set of luminance values, and determines a luminance distribution in the set of difference values.

A method according to still another embodiment is a method executed by a computer device, characterized in that the method includes: a step of obtaining a first imaged image, the first imaged image being generated by image-capturing an image-capturing target irradiated with light according to a first light-emitting pattern; a step of obtaining a second imaged image, the second imaged image being generated by image-capturing the image-capturing target irradiated with light according to a second light-emitting pattern; a step of calculating a first set of luminance values regarding a pixel in the first imaged image; a step of calculating a second set of luminance values regarding a pixel in the second imaged image; a step of calculating a set of difference values between the first set of luminance values and the second set of luminance values; and a step of determining a luminance distribution in the set of difference values.

Advantageous Effects of Invention

According to an image determination system according to an embodiment, light uniformly reflected from a photograph and the like has a set of luminance values with small luminance distribution, and thus, it is possible to determine with high accuracy that an imaged image is a re-imaged image by calculating difference values between two imaged images from an image-capturing target irradiated with the light according to different light-emitting patterns.

Brief Description of Drawings

[Fig. 1] Fig. 1 is a block diagram illustrating a configuration example of a computer device.
[Fig. 2] Fig. 2 is a block diagram illustrating an example of a logical configuration of the computer device according to a first embodiment.
[Fig. 3] Fig. 3 is a diagram illustrating an example of calculating a luminance value from an actually-imaged image.
[Fig. 4] Fig. 4 is a diagram illustrating an example of calculating a luminance value from a re-imaged image.
[Fig. 5] Fig. 5 is a flowchart illustrating an example of processing executed by the computer device according to the first embodiment.
[Fig. 6] Fig. 6 is a block diagram illustrating an example of a logical configuration of a computer device according to a second embodiment.
[Fig. 7] Fig. 7 is a flowchart illustrating an example of processing executed by the computer device according to the second embodiment.

Description of Embodiments

An image determination system according to an embodiment is described below in detail with reference to the appended drawings. For example, the image determination system specifies an imaged image such as a photograph or a video that is generated by further image-capturing an image (a still image or a moving image) generated by image-capturing the face of a human in advance instead of an imaged image that is generated by image-capturing the face of a human in face authentication. For example, the image determination system executes processing according to the present embodiment as a previous step of execution of the face authentication.

Hereinafter, in the present embodiment, an image generated by image-capturing an image such as a photograph is referred to as a "re-imaged image", and an image generated by image-capturing a target such as an existing human, animal, and the like is referred to as an "actually-imaged image". Additionally, an arbitrary object to be image-captured (including an object that is an original for generating the actually-imaged image such as a human and an animal and an object that is an original for generating the re-imaged image such as a still image or a moving image) is referred to as an "image-capturing target".

A malicious third person can use the re-imaged image to impersonate someone else for authentication requested by a computer system implementing the face authentication. The image determination system according to the present embodiment determines whether the imaged image is the actually-imaged image or the re-imaged image in order to prevent such impersonating.

<First Embodiment>

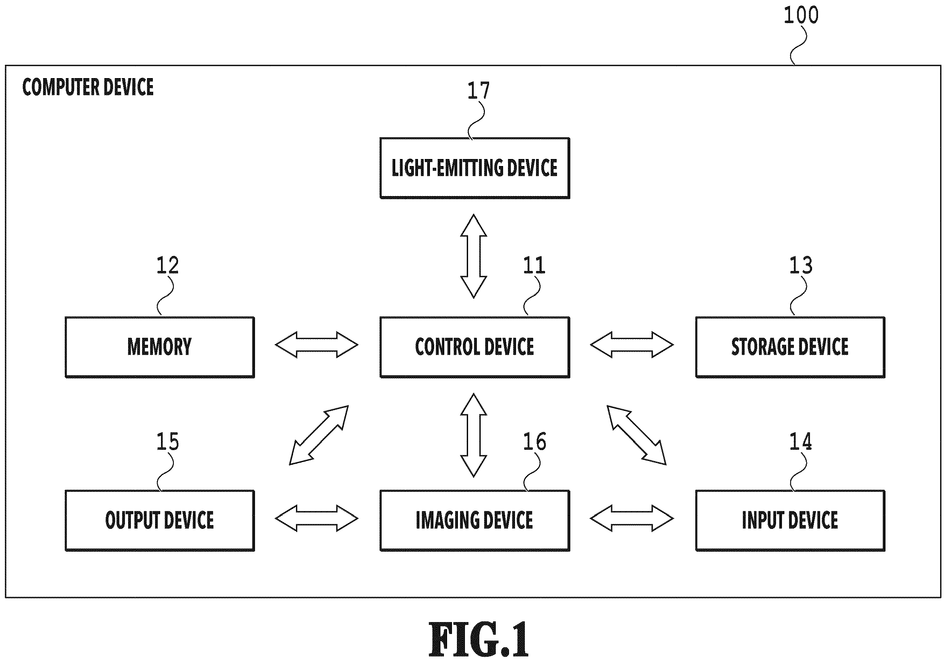

First, an example of a configuration of the image determination system is described with reference to Fig. 1. In the present embodiment, the image determination system is implemented by a computer device 100. The computer device 100 may be a portable computer device such as a smartphone and a tablet, a laptop type computer device, a note type computer device, a built-in computer device of a security system that unlocks an electric key or an automatic door at an entry and exit gate, and the like.

The computer device 100 includes a control device 11, a memory 12, a storage device 13, an input device 14, an output device 15, an imaging device 16, and a light-emitting device 17. Each of the memory 12, the storage device 13, the input device 14, the output device 15, the imaging device 16, and the light-emitting device 17 is coupled to the control device 11 through an internal bus and is controlled by the control device 11.

The control device 11 is also referred to as a processor and includes a central processing unit (CPU), a graphic processing unit (GPU), and the like. The control device 11 executes control and computation of each constituent described above.

The memory 12 is a volatile data storage device that stores a computer-executable command processed by the control device 11, data after computation processing by the command, and the like. The memory 12 may be implemented by a RAM (random access memory) (for example, an SRAM (static RAM) and a DRAM (dynamic RAM)) and the like.

The storage device 13 is a non-volatile data storage device that stores the above-described program, a later-described threshold, and the like. The storage device 13 may be implemented by a non-volatile semiconductor memory such as a ROM (read only memory), a magnetic storage device (such as a hard disk drive), an optical disc, and the like. Note that, data such as the program and a database table may be stored in an NAS (Network Attached Storage) and/or an SAN (Storage Area Network), for example, in addition to or instead of the storage device 13.

The input device 14 supports a user to input information in a case where the user dialogues with the computer device 100. The input device 14 is implemented by a mouse, a keyboard, a microphone, and the like. Similarly, the output device 15 also supports output of information to the user in a case where the user dialogues with the computer device 100. The output device 15 is implemented by a display screen, a speaker, and the like.

The imaging device 16 is a camera that is for image-capturing an image-capturing target and that includes one or more CCD image sensors, CMOS image sensors, or the like. An image generated by image-capturing by the imaging device 16 forms the re-imaged image or the actually-imaged image. In the imaging device 16, desirably, image sensors are arrayed as many as possible in order to generate an image with high-resolution.

The light-emitting device 17 irradiates the image-capturing target with light having a predetermined color and/or intensity. The light includes light having any wavelength (visible light and invisible light such as infrared ray). For example, the light-emitting device 17 is implemented by an array of not-illustrated LEDs (RGB) and emits at least two types of light. With the array in which the LEDs as many as possible are evenly arrayed being provided in the light-emitting device 17, it is possible to irradiate the entirety of the image-capturing target with the light, to emit much more light, and to generate a clearer image.

The present embodiment is implemented by the image determination system including the above-described computer device 100 or at least the control device 11, the imaging device 16, and the light-emitting device 17. In the present embodiment, an example in which the control device 11, the imaging device 16, and the light-emitting device 17 are implemented in the single computer device 100 is described; however, it is not limited to such an example. For example, each of the imaging device 16 and the light-emitting device 17 may function as a single device and may be coupled to the computer device 100 including the control device 11.

Additionally, the imaging device 16 and the light-emitting device 17 may be coupled to each other to form a single device, and the device may be coupled to the computer device 100. Moreover, the computer device 100 and the imaging device 16 and the light-emitting device 17 may be directly coupled to each other. Alternatively, the computer device 100 and the imaging device 16 and the light-emitting device 17 may be connected to each other through a network. In this case, the computer device 100 includes a not-illustrated communication device (a LAN adapter or the like).

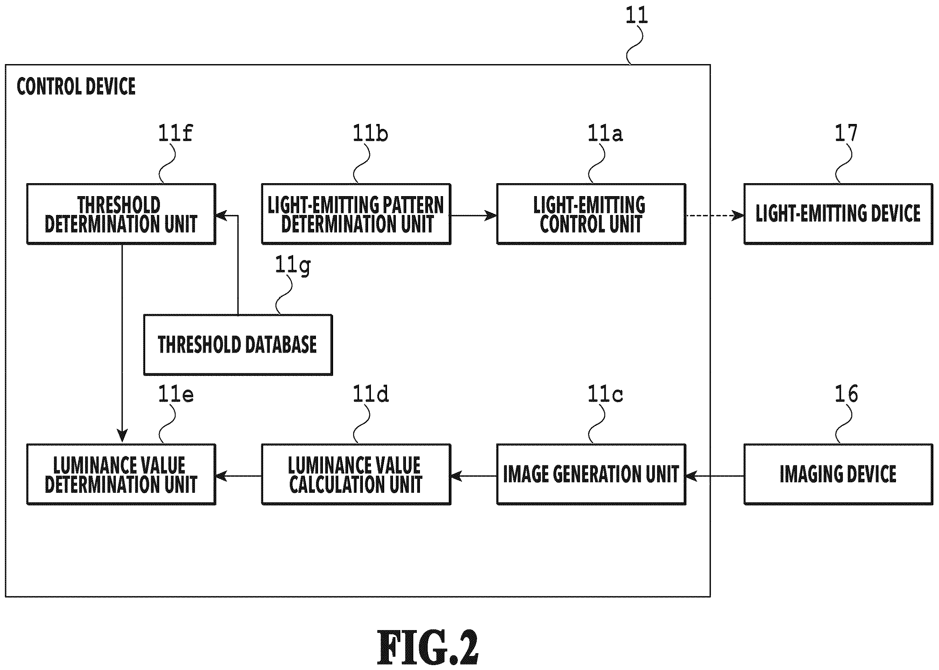

Next, an example of a logical configuration (logical modules) of the computer device 100 implemented by the control device 11 is described with reference to Fig. 2. Each of the logical modules executes processing according to the present embodiment with the control device 11 executing the program stored in the storage device 13. Note that, the logical modules illustrated in Fig. 2 are merely examples.

As the logical modules, the control device 11 implements a light-emitting control unit 11a, a light-emitting pattern determination unit 11b, an image generation unit 11c, a luminance value calculation unit 11d, a luminance value determination unit 11e, and a threshold determination unit 11f.

The light-emitting control unit 11a transmits a signal to instruct irradiation of the image-capturing target with the light having the predetermined color and/or intensity to the light-emitting device 17. The light-emitting device 17 irradiates the image-capturing target with the light according to the signal from the light-emitting control unit 11a. Additionally, the light-emitting control unit 11a transmits a signal to instruct a light-emitting timing and/or the number of times of light-emitting per unit time of the light to the light-emitting device 17.

The light-emitting pattern determination unit 11b determines the color and/or the intensity and the light-emitting timing and/or the number of times of light-emitting per unit time of the light emitted by the light-emitting device 17. Those color, intensity, light-emitting timing, and the like of the light are referred to as a light-emitting pattern hereinafter. The light-emitting pattern determination unit 11b may determine the light-emitting pattern based on a light-emitting pattern that is determined in advance and stored in the storage device 13 or may determine the light-emitting pattern randomly (for example, random numbers are generated, and the color and the like are determined based on the random numbers). Once the light-emitting pattern determination unit 11b determines the light-emitting pattern, the light-emitting pattern is transmitted to the light-emitting control unit 11a.

The image generation unit 11c receives an imaging signal generated by the imaging device 16 imaging the image-capturing target and generates the imaged image based on the imaging signal. As described later, the imaging device 16 image-captures the image-capturing target while the light-emitting device 17 is emitting the light to the image-capturing target. Therefore, as a luminance value calculated regarding a pixel in the imaged image generated by the image generation unit 11c, a luminance value corresponding to a color component of the light emitted by the light-emitting device 17 is added.

In the present embodiment, the image generation unit 11c generates at least two imaged images. A first imaged image (first imaged image) is generated by image-capturing the image-capturing target while the light-emitting device 17 is irradiating the image-capturing target according to a first light-emitting pattern. A second imaged image (second imaged image) is generated by image-capturing the image-capturing target while the light-emitting device 17 is irradiating the image-capturing target according to a second light-emitting pattern.

The luminance value calculation unit 11d calculates a set of luminance values regarding pixels in the entire region or a partial region in the image (that is, a predetermined region; hereinafter referred to as a "target region") of each of the first imaged image and the second imaged image and calculates difference values (a set of difference values) between a set of luminance values regarding the first imaged image and a set of luminance values regarding the second imaged image. Additionally, the luminance value calculation unit 11d determines a region (a characteristic region) corresponding to a cheek, a chin, and the like from the set of difference values (or a first set of luminance values and/or a second set of luminance values). Moreover, the luminance value calculation unit 11d binarizes difference values (luminance values) of a predetermined percentage (for example, 15% of the calculated set of difference values) from the calculated set of difference values.

The luminance value determination unit 11e determines connected components from the binarized values and determines whether the connected components are positioned in the characteristic region. The determination whether the connected components are positioned in the characteristic region is performed by determining a gravity center position of the luminance from the connected components and determining whether the gravity center position is positioned in the characteristic region. Additionally, the luminance value determination unit 11e determines whether the connected components positioned in the characteristic region are greater than a predetermined threshold. The connected components correspond to a set of pixels that are interconnected and have the same values out of the binarized set of binaries. If it is determined that the connected components are greater than the threshold, the luminance value determination unit 11e determines that the imaged image corresponds to the re-imaged image. In this case, for example, it is determined that a malicious third person uses a photograph or the like and tries to impersonate someone else in the face authentication.

The threshold determination unit 11f determines the above-described threshold. The threshold determination unit 11f may determine the threshold based on a predetermined threshold stored in a threshold database 11g of the storage device 13. For example, for the face authentication, this threshold may be a value obtained from an experiment according to concavity and convexity on the face of a human, the threshold may be determined for each individual to be authenticated, or the threshold may be determined for each specific group such as each specific race.

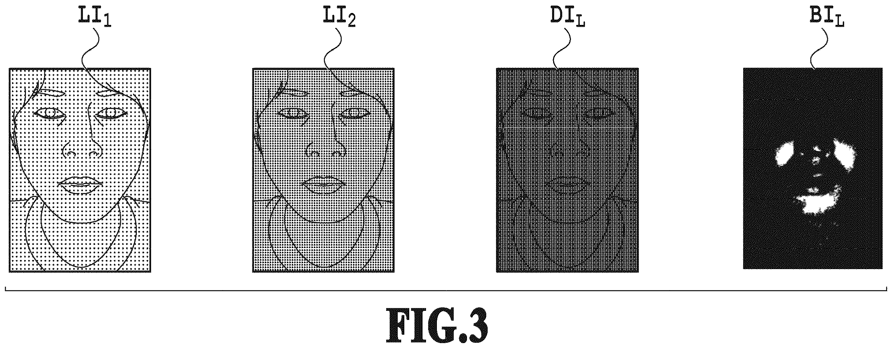

Next, an example in which the luminance value calculation unit 11d calculates pixel values of two imaged images (the actually-imaged images) generated from an existing human (the image-capturing target) is described with reference to Fig. 3. As described above, the image generation unit 11c generates the first imaged image by image-capturing the image-capturing target while the light-emitting device 17 is irradiating the image-capturing target according to the first light-emitting pattern. This imaged image is referred to as a "first (actually-) imaged image". In the example illustrated in Fig. 3, a first imaged image LIi is generated by image-capturing the image-capturing target while the light-emitting device 17 is irradiating the image-capturing target with red color light.

Additionally, the image generation unit 11c generates the second imaged image by image-capturing the image-capturing target while the light-emitting device 17 is irradiating the image-capturing target according to the second light-emitting pattern. This imaged image is referred to as a "second (actually-) imaged image". In the example illustrated in Fig. 3, a second imaged image $LI_2$ is generated by image-capturing the image-capturing target while the light-emitting device 17 is irradiating the image-capturing target with black color light.

The luminance value calculation unit 11d calculates luminance values regarding all the pixels in the target region in the first imaged image LIi, that is, a set of luminance values regarding the first imaged image LIi. This set of luminance values is referred to as a "first set of luminance values". Additionally, the luminance value calculation unit 11d calculates luminance values regarding all the pixels in the target region in the second imaged image $LI_2$, that is, a set of luminance values regarding the second imaged image $LI_2$. This set of luminance values is referred to as a "second set of luminance values".

The luminance values are calculated by weighted-averaging corresponding pixel RGB values according to an expression (1). The coefficients used in the expression (1) (0.298912 for R, 0.586611 for G, and 0.114478 for B) are derived from a rule of thumb that the human eyes see in that way:

$$\text{luminance value} = 0.298912 \times R + 0.586611 \times G + 0.114478 \times B$$

$$\text{expression (1)}.$$

Next, the luminance value calculation unit 11d calculates the difference values between the first set of luminance values and the second set of luminance values, that is, the difference values (the set of difference values) of the luminance values regarding the corresponding pixels regarding the actually-imaged images. Additionally, the luminance value calculation unit 11d determines the characteristic region from the set of difference values (or the first set of luminance values and/or the second set of luminance values).

The difference values for the corresponding pixels basically correspond to a luminance value corresponding to contrast between the light radiated according to the first light-emitting pattern (the red color light) and the light radiated according to the second light-emitting pattern (the black color light); however, this luminance value is changed depending on the reflection properties of the light radiated onto the image-capturing target. For example, since the face of a human has concavity and convexity, the light radiated onto the face is ununiformly reflected; thus, the set of difference values calculated from the actually-imaged image (generated by image-capturing the face of a human) has various luminance values.

Fig. 3 illustrates a difference value image $DI_L$ generated based on the set of difference values regarding the actually-imaged images. Note that, although the difference value image $DI_L$ is not actually displayed on the output device 15 and the like, an image generated based on the set of difference values is illustrated in Fig. 3 for easy understanding.

As illustrated in Fig. 3, a region of a background portion of the difference value image $DI_L$ is barely visible. The background is flatter than the concavity and convexity of the face and the like; for this reason, the radiated light is uniformly reflected. Therefore, the difference values corresponding to the background region out of the set of difference values regarding the actually-imaged image have only a luminance value at the same degree as the luminance value corresponding to the above-described contrast. On the other hand, in a region of a face portion of the difference value image $DI_L$, it is possible to recognize the shape of the face of a human more than the region of the background portion. This is because, since the light radiated onto the concavity and convexity of the face and the like is reflected ununiformly, the difference values have values reflecting various luminance values in addition to the luminance value corresponding to the above-described contrast.

Next, the luminance value calculation unit 11d binarizes the set of difference values of the predetermined percentage (for example, 15%) out of the set of difference values based on the predetermined luminance value, that is, calculates the set of binaries. The predetermined luminance value is a luminance value as a reference for binarization of the set of difference values (hereinafter, referred to as a "reference luminance value") and is at least a value that is equal to or greater than the luminance value corresponding to the contrast between the light radiated according to the first light-emitting pattern and the light radiated according to the second light-emitting pattern. The reference luminance value may be, for example, an average value of the set of difference values or a value increased or decreased from the average value. Next, the luminance value determination unit 11e determines the connected components from the set of binaries and determines whether the connected components are positioned in the characteristic region.

Additionally, for example, the reference luminance value may be derived according to an expression (2):

$$\text{reference luminance value} = (CI_1 - CI_2) + \alpha \qquad \text{expression (2)}.$$

Note that, a value calculated by $CIi - CI_2$ corresponds to the luminance value corresponding to the above-described contrast.

The $CIi$ is a luminance value calculated from a pixel in the image generated by irradiating, for example, a plain and flat object such as a white wall with the light according to the first light-emitting pattern (the red color light in the example in Fig. 3) and image-capturing the object. This luminance value may be a luminance value regarding a specific pixel in the image or may be an average of luminance values regarding specific multiple pixels. The CIi is a predetermined value that is obtained through experimental calculation with the first light-emitting pattern and is stored in the storage device 13.

The $CI_2$ is a luminance value calculated from a pixel in the image generated by irradiating, for example, a plain and flat object such as a white wall with the light according to the second light-emitting pattern (the black color light in the example in Fig. 3) and image-capturing the object. This luminance value may be a luminance value regarding a specific pixel in the image or may be an average of luminance values regarding specific multiple pixels. The $CI_2$ is a predetermined value that is obtained through experimental calculation with the first light-emitting pattern and is stored in the storage device 13.

For example, $\alpha$ may be an average value of the set of luminance values calculated from the re-imaged images generated by image-capturing faces of any people. $\alpha$ is a predetermined value obtained through experimental calculation. In this way, the reference luminance value may be stored in the storage device 13 in advance.

Fig. 3 illustrates a binary image $BI_L$ indicating an image of only the connected components from the set of binaries regarding the actually-imaged image. Note that, although the binary image $BI_L$ is not actually displayed on the output device 15 and the like, an image generated based on only the connected components in the set of binaries is illustrated in Fig. 3 for easy understanding.

As illustrated in Fig. 3, the binary image $BI_L$ can recognize only the characteristic region (a cheek, a chin, and the like). This is because, in the actually-imaged image, the luminance values in the characteristic region are locally high, only the characteristic region and a region close to the characteristic region are greater than the reference luminance value, and only neighboring pixels having the luminance values greater than the reference luminance value are expressed in the binary image $BI_L$. That is, depending on the reflection properties of the light reflected from the image-capturing target, only the neighboring pixels having the luminance values greater by a predetermined value than the luminance value corresponding to the above-described contrast are expressed in the binary image $BI_L$.

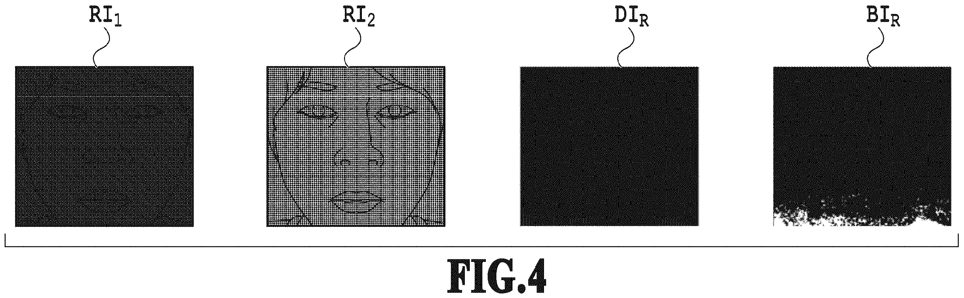

Next, an example in which the luminance value calculation unit 11d calculates pixel values of two imaged images (the re-imaged images) generated from a still image or a moving image (the image-capturing target) is described with reference to Fig. 4. As described above, the image generation unit 11c generates a first (re-) imaged image by image-capturing the image-capturing target while the light-emitting device 17 is irradiating the image-capturing target according to the first light-emitting pattern. In the example illustrated in Fig. 3, a first imaged image RIi is generated by image-capturing the image-capturing target while the light-emitting device 17 is irradiating the image-capturing target with the red color light.

Additionally, the image generation unit 11c generates a second (re-) imaged image by image-capturing the image-capturing target while the light-emitting device 17 is irradiating the image-capturing target according to the second light-emitting pattern. In the example illustrated in Fig. 3, a second imaged image $RI_2$ is generated by image-capturing the image-capturing target while the light-emitting device 17 is irradiating the image-capturing target with the black color light.

The luminance value calculation unit 11d calculates the first set of luminance values regarding all the pixels in the target region in the first imaged image RIi. Additionally, the luminance value calculation unit 11d calculates the second set of luminance values regarding all the pixels in the target region in the second imaged image $RI_2$. The luminance values may be calculated according to the above-described expression (1).

Next, the luminance value calculation unit 11d calculates the difference values (the set of difference values) of the luminance values regarding the corresponding pixels regarding the re-imaged images. Additionally, the luminance value calculation unit 11d determines the characteristic region from the set of difference values (or the first set of luminance values and/or the second set of luminance values). Fig. 4 illustrates a difference value image $DI_R$ generated based on the set of difference values of the luminance values regarding the re-imaged images. Note that, although the difference value image $DI_R$ is not actually displayed on the output device 15 and the like, an image generated based on the set of difference values is illustrated in Fig. 4 for easy understanding.

As illustrated in Fig. 4, the difference value image $DI_R$ is barely visible. A plane of a photograph, a video, and the like is flatter than a plane of an existing object such as a human; for this reason, the radiated light is uniformly reflected. Therefore, as a whole, the set of difference values calculated from the re-imaged images include more pixels having only a luminance value at the same degree as the luminance value corresponding to the above-described contrast than the set of difference values calculated from the actually-imaged images (that is, a range of luminance distribution is small).

Next, the luminance value calculation unit 11d binarizes the set of difference values of the predetermined percentage (for example, 15%) out of the set of difference values based on the reference luminance value, that is, calculates the set of binaries. The reference luminance value may be an average value of the set of difference values, may be a value increased or decreased from the average value, or may be derived according to the above-described expression (2). Next, the luminance value determination unit 11e determines the connected components from the set of binaries and determines whether the connected components are positioned in the characteristic region.

Fig. 4 illustrates a binary image $BI_R$ indicating an image of only the connected components from the set of binaries regarding the actually-imaged images. Note that, although the binary image $BI_R$ is not actually displayed on the output device 15 and the like, an image generated based on only the connected components in the set of binaries is illustrated in Fig. 4 for easy understanding.

As illustrated in Fig. 4, the binary image $BI_R$ is barely visible. This is because, as described above, comparing with the actually-imaged image, the re-imaged image includes more pixels having only the luminance value at the same degree as the luminance value corresponding to the above-described contrast and less neighboring pixels having the luminance value greater by a predetermined value than the luminance value corresponding to the above-described contrast.

Comparing the set of binaries calculated from the actually-imaged images illustrated in Fig. 3 with the set of binaries calculated from the re-imaged images illustrated in Fig. 4, the set of binaries calculated from the actually-imaged images includes more connected components in the characteristic region than the set of binaries calculated from the re-imaged images. This is because the object that is an original for generating the actually-imaged image (the face of a human and the like) has concavity and convexity characteristic region, the light radiated onto the concavity and convexity and the like is ununiformly reflected, and various luminance values are included.

As described with reference to Figs. 3 and 4, the set of binaries calculated from the actually-imaged images includes more connected components in the characteristic region than the set of binaries calculated from the re-imaged images. Therefore, the numbers of the connected components in the two characteristic regions are different greatly. Accordingly, the number of the connected components in the set of binaries calculated from the re-imaged images is greatly smaller than the number of the connected components in the set of binaries calculated from the actually-imaged images, and it is possible to determine that the imaged image is the re-imaged image if the number of the connected components in the set of binaries calculated from the re-imaged images is smaller than the predetermined threshold.

In the present embodiment, focusing that there occurs a difference in the luminance values between the actually-imaged image and the re-imaged image depending on the reflection properties of the light radiated onto the image-capturing target, whether the imaged image is the actually-imaged image or the re-imaged image is determined from the luminance values of the actually-imaged image and the re-imaged image by the above-described procedure.

Note that, in the present embodiment, the first light-emitting pattern corresponds to the light having red color, and the second light-emitting pattern corresponds to the light having black color; however, it is not limited to such patterns. The first light-emitting pattern and the second light-emitting pattern correspond to two types of light having colors and/or intensities different from each other such that the two types of light have some degrees of contrast.

The first light-emitting pattern and the second light-emitting pattern desirably have a high contrast of the light emitted according to the two patterns. A combination of the first light-emitting pattern (emitting the light having a first color and/or intensity) and the second light-emitting pattern (emitting the light having a second color and/or intensity) may be determined in advance. In this case, a combination of predetermined patterns is stored in the storage device 13, and the light-emitting pattern determination unit 1 1b reads the value.

Additionally, as the value of the above-described predetermined percentage is smaller, the difference values regarding more pixels regarding the two imaged images are calculated. This increases a calculation load on the control device 11 (the luminance value calculation unit 11d); however, the accuracy of determining that the imaged image is the re-imaged image is increased as well. On the other hand, as the value of the predetermined percentage is greater, the difference values regarding less pixels regarding the two imaged images are calculated. This reduces the calculation load on the control device 11 (the luminance value calculation unit 11d), however, the accuracy of determining that the imaged image is the re-imaged image is reduced as well.

As the above-described contrast between the light radiated onto the image-capturing target according to the first light-emitting pattern and the light radiated onto the image-capturing target according to the second light-emitting pattern is higher, the accuracy to determine that the imaged image is the re-imaged image is not reduced even in a case where the above-described predetermined percentage is great. Therefore, for example, the above-described percentage may be determined in advance as indicated in Table 1 according to the combination of the first light-emitting pattern and the second light-emitting pattern. The values indicated in Table 1 may be values obtained experimentally.

[Table 1]

| Combinations of Patterns | Percentage |
|---|---|
| first light-emitting pattern: red color light | 15% |
| second light-emitting pattern: black color light | |
| first light-emitting pattern: white color light | 20% |
| second light-emitting pattern: black color light | |

(continued)

| Combinations of Patterns | Percentage |
|---|---|
| ... | |

Additionally, also for the above-described reference luminance value, an appropriate value (($CI_1$ - $CI_2$) in the above-described expression (2)) is determined according to the contrast between the light radiated onto the image-capturing target according to the first light-emitting pattern and the light radiated onto the image-capturing target according to the second light-emitting pattern described above. Therefore, the above-described reference luminance value may be determined in advance according to the combination of the first light-emitting pattern and the second light-emitting pattern.

Moreover, for the threshold as a reference to determine whether the imaged image is the actually-imaged image or the re-imaged image, for example, the value is determined in advance depending on the properties of the face such as the concavity and convexity of the face of a human. Therefore, the threshold is desirably determined in advance for each individual as the authentication target. On the other hand, taking into consideration a load and the like of determining in advance the threshold for each individual, a statistical value may be determined in advance for the threshold depending on a predetermined group (for example, race and the like that feature the face of a human).

The above-described threshold is stored in the threshold database 11g. In a case where the threshold is determined for each individual, the threshold is stored with an identification number specifying the threshold and the individual. The threshold determination unit 11f obtains the corresponding threshold from the threshold database 11g based on the identification number (for example, passport number in a case where the present embodiment is used for immigration check). This case is effective in a case where the individual as the authentication target has determined (that is, one-to-one authentication).

In a case where the threshold is determined for each specific group described above, the threshold determination unit 11f determines whether the individual as the authentication target belongs to which group (for example, in a case where the present embodiment is used for immigration check, and the group is determined for each race, the race is determined from the nationality written in the passport), and the threshold corresponding to the race is obtained from the threshold database 11g. This case is effective in a case where the individual as the authentication target has not determined (that is, one-to-N authentication).

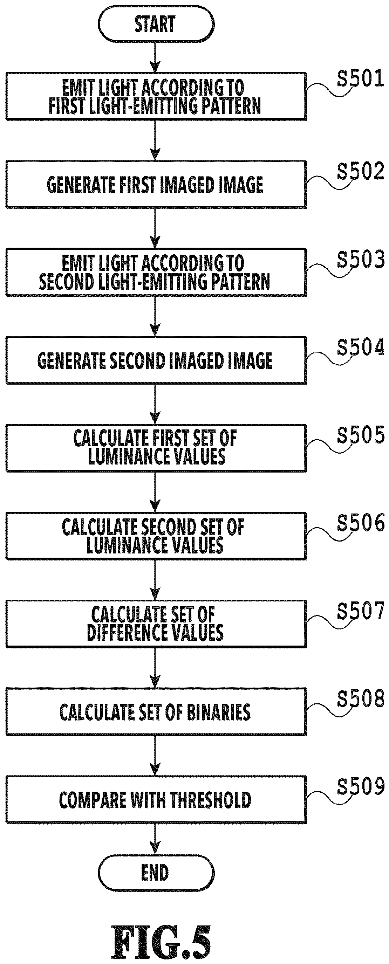

Next, an example of processing executed by the computer device 100 according to the first embodiment is described with reference to a flowchart illustrated in Fig. 5. The processing illustrated in Fig. 5 is executed with the control device 11 executing the program stored in the storage device 13.

First, based on the instruction of the control device 11 (the light-emitting control unit 11a), the light-emitting device 17 emits the light according to the first pattern and irradiates the image-capturing target with the light (step S501). The first light-emitting pattern is determined by the light-emitting pattern determination unit 11b and may be a predetermined light-emitting pattern. In the present embodiment, the first light-emitting pattern is the light-emitting pattern to emit the red color light.

Next, based on the instruction of the control device 11, the imaging device 16 image-captures the image-capturing target irradiated with the light according to the first pattern and transmits the imaging signal to the control device 11 (the image generation unit 11c). The control device 11 (the image generation unit 11c) generates the first imaged image based on the imaging signal (step S502).

Next, based on the instruction of the control device 11 (the light-emitting control unit 11a), the light-emitting device 17 emits the light according to the second pattern and irradiates the image-capturing target with the light (step S503). The second light-emitting pattern is determined by the light-emitting pattern determination unit 11b and may be a predetermined light-emitting pattern. In the present embodiment, the first light-emitting pattern is the light-emitting pattern to emit the black color light.

Next, based on the instruction of the control device 11, the imaging device 16 image-captures the image-capturing target irradiated with the light according to the second pattern and transmits the imaging signal to the control device 11 (the image generation unit 11c). The control device 11 (the image generation unit 11c) generates the second imaged image based on the imaging signal (step S504).

Next, the control device 11 (the luminance value calculation unit 11d) calculates the first set of luminance values from the first imaged image (step S505) and calculates the second set of luminance values from the second imaged image (step S506). The luminance values may be calculated according to the above-described expression (1). In this process, the control device 11 (the luminance value calculation unit 11d) may determine the characteristic region such as an eye and a nose from the first imaged image and may calculate the luminance values in only the region as the first set of luminance values. The same applies to the second imaged image. With the set of luminance values in only the characteristic region being calculated, it is possible to reduce a processing load to calculate an unrelated region for the face authentication such as a background region.

Next, the control device 11 (the luminance value calculation unit 11d) calculates the difference values (the set of difference values) of the luminance values from the first set of luminance values and the second set of luminance values (step S507). In this process, the control device 11 (the luminance value calculation unit 11d) determines the characteristic region from the set of difference values (or the first set of luminance values and/or the second set of luminance values). Next, the control device 11 (the luminance value calculation unit 11d) binarizes the set of difference values of the predetermined percentage out of the set of difference values based on the reference luminance value (calculates the set of binaries) (step S508).

Next, the control device 11 (the luminance value determination unit 11e) determines the connected components from the set of binaries and determines whether the connected components are positioned in the characteristic region. Then, the control device 11 (the luminance value determination unit 11e) determines whether the total of the number of pixels in the connected components that are determined to be positioned in the characteristic region is smaller than the predetermined threshold (step S509). The determination whether the connected components are positioned in the characteristic region is performed by determining the gravity center position of the luminance from the connected components and determining whether the gravity center position is positioned in the characteristic region. For the connected components, for example, the total of the number of pixels in predetermined number of end-connected components and/or multiply-connected components such as four-neighbors and/or eight-neighbors is calculated, and whether the total of the number of pixels in the connected components is smaller than the predetermined threshold may be determined.

If it is determined to be smaller than the threshold, it is determined that the imaged image generated from the image-capturing target is the re-imaged image generated by image-capturing a photograph and the like. The predetermined threshold is determined for each individual or specific group and is determined by the threshold determination unit 11f.

The following processing is also possible instead of the processing in the steps S508 and S509. For example, the control device 11 (the luminance value calculation unit 11d) may generate a luminance value histogram based on the set of difference values and may determine whether a change in the luminance values (a luminance gradient) is smaller than a predetermined threshold based on the luminance value histogram. The luminance value histogram is a graphed distribution of the set of luminance values corresponding to the set of difference values. For example, the luminance value histogram may be generated from the size of an edge (sum of squares of a differentiation value) by calculating sum of squares by applying a differentiation filter (Sobel filter) to the set of difference values in a vertical direction and a horizontal direction.

As described above, the set of luminance values in the re-imaged image has a smaller distribution range than the set of luminance values in the actually-imaged image. Accordingly, the set of difference values from the re-imaged image has a smaller luminance gradient of the luminance values than the set of difference values generated from the actually-imaged image. Therefore, in a case where the luminance gradient of the luminance in the set of difference values is smaller than the threshold, it is determined that the imaged image generated from the image-capturing target is the re-imaged image. The luminance gradient may be determined by calculating the luminance value range, average, and/or dispersion, for example, from the set of luminance values.

Note that, the control device 11 (the luminance value calculation unit 11d) may calculate the luminance gradient of the above-described predetermined percentage (or an average value of the luminance gradient) out of the set of difference values, and the luminance gradient of only a portion with a great luminance gradient (or the average value of the luminance gradient) may be compared with the threshold.

Additionally, instead of the above-described processing, the control device 11 (the luminance value calculation unit 11d) may determine whether there is a peak value in the specific region such as a cheek and a chin or whether the number of the peak value is greater than a predetermined threshold from the set of difference values. In the actually-imaged image, comparing with the re-imaged image, the portion corresponding to a cheek, a chin, and the like has a higher luminance than a peripheral region, and there is the peak value. Therefore, with such a peak value being determined, it is possible to determine that the imaged image is the re-imaged image.

As described above, in each of the steps S505 and S506, the characteristic portion may be determined from the first imaged image and the second imaged image, and the peak value may be extracted from the characteristic portion. With this, it is possible to reduce a calculation load to extract the peak value.

Any of the comparison of the connected components with the threshold, the comparison of the luminance gradient with the threshold, and the comparison of the peak value with the threshold described above correspond to the determination of the luminance distribution in the set of difference values. With the luminance distribution being determined, it is possible to determine that the imaged image with a small luminance distribution is the re-imaged image.

With the processing described in Fig. 5, the computer device 100 determines whether the imaged image is the actually-imaged image or the re-imaged image, and if it is determined to be the actually-imaged image, the face authentication is executed based on the actually-imaged image. On the other hand, if it is determined to be the re-imaged image, for example, an error message is outputted to the output device 15 without executing the face authentication.

Note that, descriptions of the processing of the face authentication are omitted in the present specification.

The first embodiment is described as above. In the first embodiment, whether the imaged image is the actually-imaged image or the re-imaged image is determined based on the difference values calculated from the two imaged images from the image-capturing target irradiated with the light according to the different light-emitting patterns.

The technique described in PTL 1 merely counts the number of pixels for each luminance regarding the pixels in the face region in the imaged image; for this reason, for example, the set of luminance values in the re-imaged image generated from the photograph that is image-captured by a high-accuracy camera may have a great luminance distribution in some cases. Therefore, in some cases, it is impossible to determine whether the imaged image is the actually-imaged image or the re-imaged image.

In the present embodiment, the light uniformly reflected from a photograph and the like has the set of luminance values with a small luminance distribution, and thus, it is possible to determine with higher accuracy that the imaged image is the re-imaged image than the technique described in PTL 1 by calculating the difference values between the two imaged images from the image-capturing target irradiated with the light according to the different light-emitting patterns.

<Second Embodiment>

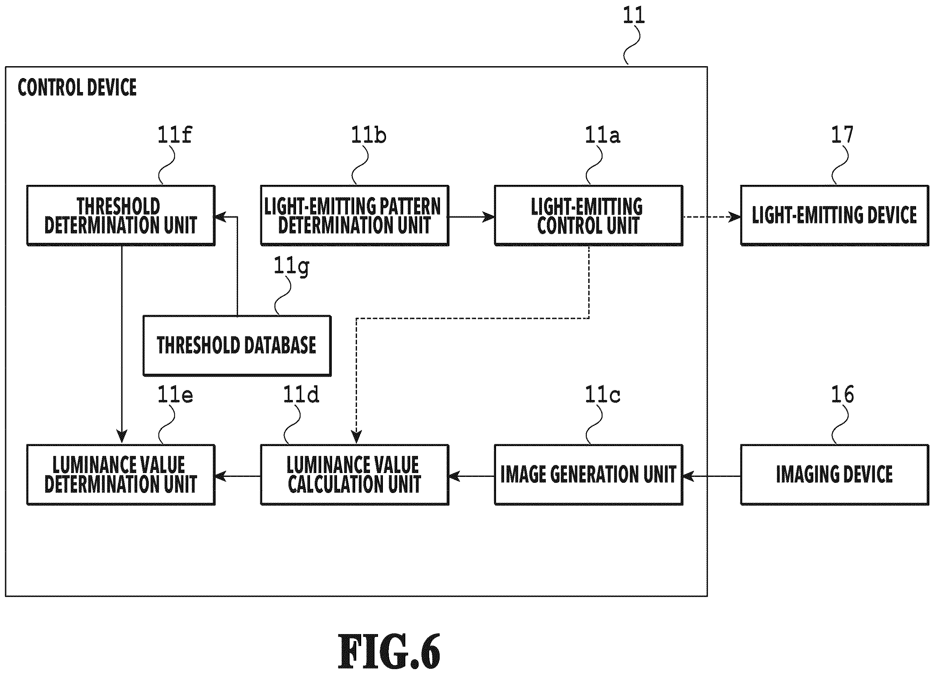

Next, a second embodiment is described. In the second embodiment, particularly, the re-imaged image generated by image-capturing a moving image is specified. An image determination system according to the second embodiment is implemented by the computer device 100 as well. The configuration of the computer device 100 is similar to the configuration described in the first embodiment. Fig. 6 describes an example of logical modules implemented by the control device 11 in the second embodiment.

In the second embodiment, the control device 11 implements the light-emitting control unit 11a, the light-emitting pattern determination unit 11b, the image generation unit 11c, the luminance value calculation unit 11d, the luminance value determination unit 11e, and the threshold determination unit 11f as the logical modules.

The light-emitting control unit 11a transmits the signal to instruct radiation of random light having a predetermined color and/or intensity onto the image-capturing target to the light-emitting device 17; however, in the second embodiment, repetition of on and off of light-emitting in a certain period of time, that is, blinking is instructed. This blinking is repeated in random timings. Additionally, the light-emitting control unit 11a instructs a constant change of the color and/or the intensity of the light in a certain period of time. With control by the light-emitting control unit 11a, the image-capturing target is irradiated with the random light that has different colors and/or intensities and that blinks in random timings.

The image generation unit 11c transmits a request signal to the light-emitting control unit 11a in a timing of receiving the imaging signal from the imaging device 16. In response to the request signal, the light-emitting control unit 11a notifies the luminance value calculation unit 11d of the color and the intensity of the light emitted by the light-emitting device 17 (the light-emitting pattern). That is, the luminance value calculation unit 11d recognizes the light-emitting pattern of the light during image-capturing of the image-capturing target by the imaging device 16 while the image-capturing target is being irradiated with the light. Note that, the above-described request signal may be transmitted from the imaging device 16 to the light-emitting control unit 11a in the timing in which the imaging device 16 image-captures the image-capturing target.

In the first embodiment, the image-capturing target is image-captured by a fixed combination of the light-emitting patterns such as the red color light and the black color light to generate the first imaged image and the second imaged image. In the second embodiment, the color and/or the intensity of the light emitted by the light-emitting device 17 is constantly changed; thus, the image-capturing target is image-captured by a variable combination of the light-emitting patterns to generate the first imaged image and the second imaged image.

In a case where the combination of the light-emitting patterns is fixed, for example, there is a risk that a malicious third person who recognizes the combination of the light-emitting patterns may pass the authentication by calibrating a photograph and the like in accordance with the light-emitting patterns such that the re-imaged image includes the luminance values similar to that of the actually-imaged image. In the second embodiment, the combination of the light-emitting patterns is constantly changed; for this reason, it is possible to prevent passing of the authentication by processing a photograph and the like by the above-described calibration.

Additionally, in a case where the light is emitted by the light-emitting device 17 in the fixed timing of blinking and with the fixed combination of the light-emitting patterns, there may also be considered a case of trying impersonating by emitting light that blinks in accordance with the blinking of the above light onto the face of a human and using a moving image that image-captures the human. For example, if the light-emitting device 17 irradiates the image-capturing target with the light in the same timing as that of irradiating the face of a human with the light in the moving image, depending on the color of the light, there is a risk that the authentication may be passed with the processing described in the first embodiment. In the second embodiment, since the blinking timings of the light emitted by the light-emitting device are random, it is difficult to irradiate the face of a human with the light that blinks in accordance with the above-described blinking of the light during image-capturing of the moving image.

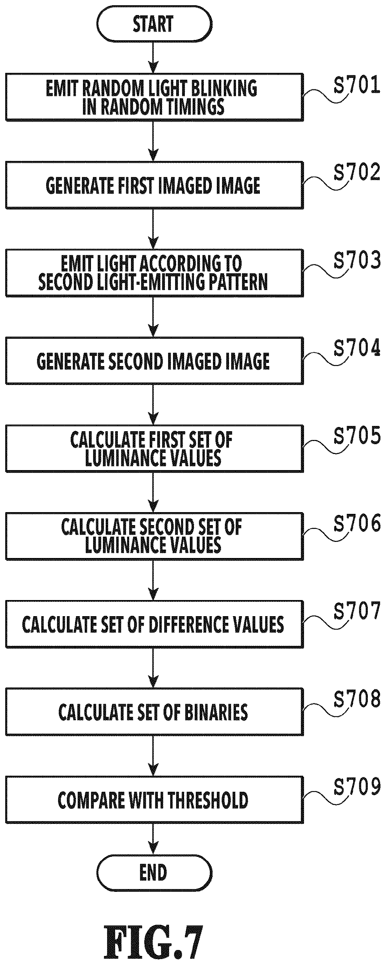

Next, an example of processing executed by the computer device 100 according to the second embodiment is described with reference to a flowchart in Fig. 7 is described. The processing illustrated in Fig. 7 is executed with the control device 11 executing the program stored in the storage device 13.

First, based on the instruction of the control device 11 (the light-emitting control unit 11a), the light-emitting device 17 emits the random light that has the different colors and/or intensities and that blinks in the random timings (step S701). With this processing, the light-emitting device 17 irradiates the image-capturing target with the light according to the first light-emitting pattern, and thereafter, after a random interval elapses, the image-capturing target is irradiated with the light according to the first light-emitting pattern.

Next, based on the instruction of the control device 11, the imaging device 16 image-captures the image-capturing target irradiated with the light according to the first light-emitting pattern and transmits the imaging signal to the control device 11 (the image generation unit 11c). The control device 11 (the image generation unit 11c) generates the first imaged image based on the imaging signal (step S702).

Next, the control device 11 (the image generation unit 11c) transmits the request signal to the control device 11 (the light-emitting control unit 11a), and in response to the request signal, the control device 11 (the light-emitting control unit 11a) notifies the control device 11 (the luminance value calculation unit 11d) of the first light-emitting pattern (the color and the intensity). With this processing, the luminance value calculation unit 11d recognizes the first light-emitting pattern in a case where the imaging device 16 image-captures the image-capturing target (for generating the first imaged image) (S703).

Next, based on the instruction of the control device 11, the imaging device 16 image-captures the image-capturing target irradiated with the light according to the second pattern and transmits the imaging signal to the control device 11 (the image generation unit 11c). The control device 11 (the image generation unit 11c) generates the second imaged image based on the imaging signal (step S704).

Next, the control device 11 (the image generation unit 11c) transmits the request signal to the control device 11 (the light-emitting control unit 11a), and in response to the request signal, the control device 11 (the light-emitting control unit 11a) notifies the control device 11 (the luminance value calculation unit 11d) of the second light-emitting pattern (the color and the intensity). With this processing, the luminance value calculation unit 11d recognizes the second light-emitting pattern in a case where the imaging device 16 image-captures the image-capturing target (for generating the first imaged image) (S705).

Next, the control device 11 (the luminance value calculation unit 11d) calculates the first set of luminance values from the first imaged image (step S706) and calculates the second set of luminance values from the second imaged image (step S707). The luminance values may be calculated according to the above-described expression (1).

Next, the control device 11 (the luminance value calculation unit 11d) calculates the difference values (set of difference values) of the luminance values from the first set of luminance values and the second set of luminance values (step S708). In this process, the control device 11 (the luminance value calculation unit 11d) determines the characteristic region from the set of difference values (or the first set of luminance values and/or the second set of luminance values). Next, the control device 11 (the luminance value calculation unit 11d) binarizes the set of difference values of the predetermined percentage out of the set of difference values based on the reference luminance value (calculates the set of binaries) (step S709).

In the steps S703 and S705, since the luminance value calculation unit 11d recognizes the first light-emitting pattern and the second light-emitting pattern, according to the combination thereof, it is possible to determine the above-described reference luminance value and percentage.

Next, the control device 11 (the luminance value determination unit 11e) determines the connected components from the set of binaries and determines whether the connected components are positioned in the characteristic region. Then, the control device 11 (the luminance value determination unit 11e) determines whether the total of the number of pixels in the connected components determined to be positioned in the characteristic region is smaller than the predetermined threshold (step S710). If it is determined to be smaller than the threshold, it is determined that the imaged image generated from the image-capturing target is the re-imaged image generated by image-capturing a photograph and the like. This threshold is as described in the first embodiment. The processing after it is determined whether the imaged image is the actually-imaged image or the re-imaged image is as described in the first embodiment.

In the second embodiment, instead of the processing in the steps S709 and S710, the luminance value histogram may be generated based on the set of difference values, and whether the luminance gradient is smaller than a predetermined threshold may be determined based on the luminance value histogram as well. Additionally, whether there is the peak value in the specific region or whether the number of the peak value is greater than a predetermined threshold may be determined.

The second embodiment is described as above. In the second embodiment, the image-capturing target is irradiated with the random light that blinks in the random timings. According to the second embodiment, it is possible to prevent a malicious third person who recognizes the fixed combination of the light-emitting patterns from processing a video in accordance with the combination of the patterns and passing the authentication by using the video.

Note that, in the second embodiment, an example of calculating the difference values from the two imaged images is described; however, it is not limited to such a configuration. In the second embodiment, since the light-emitting device 17 irradiates the image-capturing target with the light that blinks in a certain period of time, the imaging device 16 may image-capture the image-capturing target three or more times. In this case, three or more imaging devices may be generated. The set of luminance values regarding each of the three or more imaging devices may be calculated to compare the sets of luminance values from the calculation, two sets of luminance values may be selected, and the set of difference values may be calculated from the selected two sets of luminance values.

Additionally, in the second embodiment, the image generation unit 11c (or the imaging device 16) transmits the request signal to the light-emitting control unit 11a, and the light-emitting control unit 11a notifies the luminance value calculation unit 11d of the light-emitting pattern; however, it is not limited to such a configuration. For example, a light sensor or the like may be provided. In this case, the light-emitting pattern may be determined with the light sensor detecting that the imaging device 16 image-captures the image-capturing target (detecting the light radiated by the imaging device 16 onto the image-capturing target) and detecting the light emitted onto the image-capturing target by the light-emitting device 17 in the process.

Additionally, the above-described light sensor may detect the emission of the light by the light-emitting device 17 in accordance with the emission of the light that blinks in the random timings by the light-emitting device 17, and this may be notified to the imaging device 16. In response to the notification from the light-emitting device 17, the imaging device 16 may image-capture the image-capturing target. With such a configuration, it is possible to image-capture the image-capturing target while the image-capturing target is constantly irradiated with the light even if the light-emitting device 17 emits the light that blinks in the random timings.

The constituents of the hardware described in the above-described embodiments are merely examples, and note that it is also possible to apply another configuration. Additionally, the order of the processing described in the above-described embodiments is not necessarily executed in the described order and may be executed in an arbitrary order. Moreover, without departing from the basic concept of the present invention, an additional step may be newly added.

Furthermore, the image determination according to an embodiment of the present invention is implemented by a computer program executed by the computer device 100; however, the computer program may be stored in a non-temporary storage medium. An example of the non-temporary storage medium includes a read only memory (ROM), a random access memory (RAM), a register, a cache memory, a semiconductor memory device, a magnetic medium such as a built-in hard disk and a removable disc device, a magneto optical medium, an optical medium such as a CD-ROM disc and a digital versatile disc (DVD), and the like.

**Claims**

1. A computer device including a control device, **characterized in that**

   the control device is configured to
   obtain a first imaged image, the first imaged image being generated by image-capturing an image-capturing target irradiated with light according to a first light-emitting pattern,
   obtain a second imaged image, the second imaged image being generated by image-capturing the image-capturing target irradiated with light according to a second light-emitting pattern,
   calculate a first set of luminance values regarding pixels in the first imaged image,
   calculate a second set of luminance values regarding pixels in the second imaged image,
   calculate a set of difference values between the first set of luminance values and the second set of luminance values, and
   determine a luminance distribution in the set of difference values.

2. The computer device according to claim 1, **characterized in that**

   the control device is further configured to
   calculate a set of binaries by binarizing the set of difference values based on a reference luminance value,
   determine a connected component from the set of binaries,
   determine whether the connected component is positioned in a characteristic region, and
   compare the connected component positioned in the characteristic region with a predetermined threshold.

3. The computer device according to claim 2, **characterized in that**
   the control device is configured to determine whether the connected component is positioned in the characteristic region by determining a gravity center position of luminance from the connected component and determining whether the gravity center position is positioned in the characteristic region.

4. The computer device according to claim 2, **characterized in that**
the control device is further configured to calculate the set of binaries by binarizing a set of difference values of a predetermined percentage out of the set of difference values.

5. The computer device according to claim 4, **characterized in that**
the predetermined percentage is determined according to a combination of the first light-emitting pattern and the second light-emitting pattern.

6. The computer device according to claim 1, **characterized in that**

the control device is further configured to
determine a luminance gradient based on the set of difference values, and
compare the luminance gradient with a predetermined threshold.

7. The computer device according to any one of claims 1 to 6, **characterized in that**
the light radiated according to the first light-emitting pattern has a first color, and the light radiated according to the second light-emitting pattern has a second color.

8. The computer device according to any one of claims 2 to 5, **characterized in that**
the reference luminance value has a luminance value corresponding to contrast between the light radiated according to the first light-emitting pattern and the light radiated according to the second light-emitting pattern.

9. A system, **characterized in that** the system comprises:

a light-emitting device that irradiates an image-capturing target with first light according to a first light-emitting pattern and irradiates the image-capturing target with second light according to a second light-emitting pattern;
an imaging device that image-captures the image-capturing target irradiated with the first light in a first time and image-captures the image-capturing target irradiated with the second light in a second time; and
a control device that

generates a first imaged image according to image-capturing in the first time,
generates a second imaged image according to image-capturing in the second time,
calculates a first set of luminance values regarding a pixel in the first imaged image,
calculates a second set of luminance values regarding a pixel in the second imaged image,
calculates a set of difference values between the first set of luminance values and the second set of luminance values, and
determines a luminance distribution in the set of difference values.

10. The system according to claim 9, **characterized in that**
the light-emitting device emits blinking light to radiate the first light according to the first light-emitting pattern and radiate the second light according to the second light-emitting pattern.

11. The system according to claim 10, **characterized in that**
the light-emitting device emits the blinking light in random timings.

12. The system according to claim 10 or 11, **characterized in that**
the light-emitting device changes a color and/or an intensity of the blinking light.

13. A method executed by a computer device, **characterized in that** the method comprises:

a step of obtaining a first imaged image, the first imaged image being generated by image-capturing an image-capturing target irradiated with light according to a first light-emitting pattern;
a step of obtaining a second imaged image, the second imaged image being generated by image-capturing the image-capturing target irradiated with light according to a second light-emitting pattern;
a step of calculating a first set of luminance values regarding a pixel in the first imaged image;

a step of calculating a second set of luminance values regarding a pixel in the second imaged image;
a step of calculating a set of difference values between the first set of luminance values and the second set of luminance values; and
a step of determining a luminance distribution in the set of difference values.

14. A method, **characterized in that** the method comprises:

a step of irradiating an image-capturing target with first light according to a first light-emitting pattern and irradiating the image-capturing target with second light according to a second light-emitting pattern by a light-emitting device;
a step of image-capturing the image-capturing target irradiated with the first light in a first time and image-capturing the image-capturing target irradiated with the second light in a second time by an imaging device; and
a step of generating a first imaged image according to image-capturing in the first time;
a step of generating a second imaged image according to image-capturing in the second time;
a step of calculating a first set of luminance values regarding a pixel in the first imaged image;
a step of calculating a second set of luminance values regarding a pixel in the second imaged image;
a step of calculating a set of difference values between the first set of luminance values and the second set of luminance values; and
a step of determining a luminance distribution in the set of difference values by a control device.

15. A computer program including a computer-executable command, **characterized in that**
in a case of being executed by a computer device, the computer-executable command causes the computer device to execute the method according to claim 13 or 14.

**COMPUTER DEVICE** 100

LIGHT-EMITTING DEVICE 17

MEMORY 12

CONTROL DEVICE 11

STORAGE DEVICE 13

OUTPUT DEVICE 15

IMAGING DEVICE 16

INPUT DEVICE 14

# FIG.1

**FIG.2**

EP 4 191 994 A1

FIG.3

FIG.4

EP 4 191 994 A1

START

EMIT LIGHT ACCORDING TO
FIRST LIGHT-EMITTING PATTERN — S501

GENERATE FIRST IMAGED IMAGE — S502

EMIT LIGHT ACCORDING TO
SECOND LIGHT-EMITTING PATTERN — S503

GENERATE SECOND IMAGED IMAGE — S504

CALCULATE FIRST SET OF
LUMINANCE VALUES — S505

CALCULATE SECOND SET OF
LUMINANCE VALUES — S506

CALCULATE SET OF
DIFFERENCE VALUES — S507

CALCULATE SET OF BINARIES — S508

COMPARE WITH THRESHOLD — S509

END

# FIG.5

**FIG.6**

CONTROL DEVICE — 11

- 11a LIGHT-EMITTING CONTROL UNIT
- 11b LIGHT-EMITTING PATTERN DETERMINATION UNIT
- 11c IMAGE GENERATION UNIT
- 11d LUMINANCE VALUE CALCULATION UNIT
- 11e LUMINANCE VALUE DETERMINATION UNIT
- 11f THRESHOLD DETERMINATION UNIT
- 11g THRESHOLD DATABASE

17 LIGHT-EMITTING DEVICE

16 IMAGING DEVICE

START

EMIT RANDOM LIGHT BLINKING
IN RANDOM TIMINGS — S701

GENERATE FIRST IMAGED IMAGE — S702

EMIT LIGHT ACCORDING TO
SECOND LIGHT-EMITTING PATTERN — S703

GENERATE SECOND IMAGED IMAGE — S704

CALCULATE FIRST SET OF
LUMINANCE VALUES — S705

CALCULATE SECOND SET OF
LUMINANCE VALUES — S706

CALCULATE SET OF DIFFERENCE VALUES — S707

CALCULATE SET OF BINARIES — S708

COMPARE WITH THRESHOLD — S709

END

# FIG.7

## INTERNATIONAL SEARCH REPORT

| International application No. |
|---|
| **PCT/JP2021/026194** |

**A. CLASSIFICATION OF SUBJECT MATTER**

*H04N 5/232*(2006.01)i; *G06T 7/00*(2017.01)i; *G06T 7/586*(2017.01)i; *H04N 5/225*(2006.01)i
FI:   H04N5/232 290; G06T7/00 510B; G06T7/586; H04N5/225 600

According to International Patent Classification (IPC) or to both national classification and IPC

**B. FIELDS SEARCHED**

Minimum documentation searched (classification system followed by classification symbols)

H04N5/232; G06T7/00; G06T7/586; H04N5/225

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2006-259923 A (OMRON TATEISI ELECTRONICS CO.) 28 September 2006 (2006-09-28) | 1, 6, 9, 13-15 |
| | paragraphs [0007], [0030]-[0045], [0054], [0057] | |
| Y | | 2, 4, 7, 10-12 |
| A | | 3, 5, 8 |
| Y | JP 2012-113687 A (HYUNDAI MOTOR CO., LTD.) 14 June 2012 (2012-06-14) | 2, 4, 7, 10-12 |
| | paragraphs [0003], [0012]-[0013] | |
| Y | JP 2006-99614 A (TOSHIBA CORP.) 13 April 2006 (2006-04-13) | 11-12 |
| | claim 11, paragraph [0053] | |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 September 2021** | **12 October 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/026194**

| Patent document cited in search report | | | Publication date (day/month/year) | Patent family member(s) | | | Publication date (day/month/year) |
|---|---|---|---|---|---|---|---|
| JP | 2006-259923 | A | 28 September 2006 | US 2006/0210261 A1<br>paragraphs [0010], [0057]-[0078], [0090], [0093] | | | |
| JP | 2012-113687 | A | 14 June 2012 | US 2012/0134547 A1<br>paragraphs [0007], [0026]-[0027] | | | |
| JP | 2006-99614 | A | 13 April 2006 | (Family: none) | | | |

Form PCT/ISA/210 (patent family annex) (January 2015)

**REFERENCES CITED IN THE DESCRIPTION**

**Patent documents cited in the description**

- WO 2019017080 A